Europäisches Patentamt

European Patent Office

Office européen des brevets

(11) Veröffentlichungsnummer: **0 458 068 A1**

# EUROPÄISCHE PATENTANMELDUNG

(21) Anmeldenummer: 91106376.6

(22) Anmeldetag: 20.04.91

(51) Int. Cl.5: **B23K** 35/30, C22C 9/02

(30) Priorität: 15.05.90 DE 4015574

(43) Veröffentlichungstag der Anmeldung:
27.11.91 Patentblatt 91/48

(84) Benannte Vertragsstaaten:
**DE FR GB IT**

(71) Anmelder: **VACUUMSCHMELZE GMBH**
**Grüner Weg 37 Postfach 2253**
**W-6450 Hanau 1(DE)**

(72) Erfinder: **Börner, Veikko**
**Mühlstrasse 19**
**W-6450 Hanau 1(DE)**
Erfinder: **Emmerich, Kurt, Dr.**
**Im Sand 2**
**W-8755 Alzenau 3(DE)**

(54) **Metallegierung zum Hartlöten.**

(57) Zum Hartlöten von Kupferbasis- und Eisenbasislegierungen miteinander und untereinander wird eine Metallegierung mit 10 bis 20 Gew.% Sn, 0,5 bis 20 Gew.-% Ag und 0,1 bis 7 Gew.% Si, Rest Cu vorgeschlagen, die frei von Cd, Ph und Mn ist, ohne zusätzliche Flußmittel zum Löten verwendet werden kann und durch Rascherstarrung homogen und duktil herstellbar ist. Mit diesen Legierungen erhält man ein Universallot mit guter Benetzbarkeit bei Löttemperaturen im Bereich von 800 ° C.

Die Erfindung betrifft eine Metallegierung zum Hartlöten im Temperaturbereich von etwa 500 °C bis 900 °C, die zur Herstellung einer Lötverbindung ohne Verwendung zusätzlicher Flußmittel geeignet ist und durch Rascherstarrung als homogene, duktile Lötfolie oder Lötdraht herstellbar ist.

Aufgabe der vorliegenden Erfindung ist es, Legierungen anzugeben, die zum Hartlöten bei einem Schmelzpunkt unter 900 °C geeignet sind, dabei stabile Lötverbindungen ergeben und die eine so gute Benetzbarkeit sowohl für Kupferbasis- als auch für Eisenbasislegierungen aufweisen, daß man ohne zusätzliche Flußmittel beim Hartlöten dieser Legierungen miteinander und untereinander auskommt.

In der US-PS 4 587 097 = EP 166 144 sind CuMn-Hartlotlegierungen zur Verbindung von Kupferbasis und Eisenbasislegierungen und zur Verbindung von Kupferbasislegierungen untereinander bekannt, die durch Rascherstarrung einer Schmelze auf einem Kühlkörper oder in Flüssigkeit homogen und duktil hergestellt werden können und mit einem geringen Silberanteil auskommen. Manganhaltige Spezialhartlote haben aber den Nachteil, daß sie aufgrund des Mangangehaltes fast immer mit Flußmitteln verarbeitet werden müssen (s. DEGUSSA-Prospekt "Technik, die verbindet", Nr. 36, S. 297, Auswahlkriterien für DEGUSSA-Lote und DEGUSSA-Flußmittel").

Weiterhin ist es aus EP 58 206 bekannt, silberhaltige Lote auf Kupferbasis mit einem Zinngehalt von 1 bis 10 Gew.-% zum Hartlöten zu verwenden. Soweit in den dort angegebenen Legierungen Zinn (Sn) enthalten ist, wird immer ein Silberanteil von über 20 Gew.-% vorgesehen.

Es wurde nun erkannt, daß eine weitere Erhöhung des Zinnanteils bei gleichzeitiger weiterer Verminderung des Silbers unter 20 Gew.-% ohne Beeinträchtigung der Löteigenschaften, Benetzungsfähigkeit und Festigkeit der Lötstelle möglich ist. Wenn man zusätzlich zu dieser Legierungswahl zur Herstellung von Lötfolien oder Lötdrähten die Rascherstarrungstechnik anwendet, lassen sich homogene und duktile Lötmaterialien aus den angegebenen Legierungen herstellen. Hier ist erreichbar, daß die Legierungen so homogen sind, daß die Korngröße unter 10 μm liegt und so duktil, daß der Biegeradius kleiner ist als die Foliendicke.

Weiterhin wurde gefunden, daß schon geringe Mengen von Silizium bei einem Zinngehalt von über 10 % die Benetzbarkeit des zu lötenden Materials durch das Lot entscheidend verbessern, da bei diesen Legierungen das Silizium offenbar in der Lötstelle als Reduktionsmittel wirkt. Es wurde gefunden, daß sowohl Kupferbasislegierungen untereinander als auch Kupferbasislegierungen mit Eisenlegierungen, Stahl und Hartmetall sehr gut zu verbinden sind. Auch Stähle untereinander und Stahl mit Hartmetall läßt sich mit diesen erfindungsgemäßen Loten sehr gut löten.

Mit den in den Patentansprüchen genannten Legierungen stehen Hartlote zur Verfügung, die bei relativ niedriger Temperatur (unter 900 °C) schmelzen, die außerdem cadmium-, phosphor- und manganfrei sind. Als besonders effizient hat sich herausgestellt, wenn sowohl Silber als auch Silizium gleichzeitig in der Metallegierung enthalten sind.

Ausführungsbeispiele

In Tabelle 1 sind einige der untersuchten Lote, die sich allesamt durch hervorragende Löteigenschaften auszeichnen, mit den entsprechenden Schmelz- ($T_1$) und Erstarrungstemperaturen ($T_s$) zusammengestellt. Die Schmelz- und Erstarrungstemperaturen wurden mit der sogenannten differentiellen Thermoanalyse (DTA) ermittelt.

Mit den angegebenen Legierungen wurden Lötversuche angestellt, die teilweise in der Tabelle II aufgeführt sind. Tabelle II zeigt dabei eine Zusammenstellung von Lötergebnissen. Die Lötungen wurden in reduzierender, inerter und teilweise sogar oxydierender Atmosphäre durchgeführt. Die einzelnen Materialien sind als Blöcke und Folien überlappend und stumpf verlötet worden. Die Spalten Material 1 und Material 2 bedeuten dabei: 1 = Kohlenstoffstahl, 2 = hochlegierter Stahl, 3 = Kupfer, 4 = Hartmetall.

Das Fließverhalten wurde optisch und das Lötverhalten durch mechanische Belastung der Lötstelle begutachtet, das Resultat ist in der Tabelle II wiedergegeben. Es bedeuten: 1 = sehr gut, 2 = gut, 3 = befriedigend.

Die Lote B 2952 und A 4824 zeigen dabei die besten Fließ- und Löteigenschaften. Bei diesen Loten bewegt sich das Verhältnis von Silber zu Silizium zwischen 2 : 1 und 9 : 1.

## T a b e l l e   1 :

Legierungsbasis: Kupfer

| Legierung | Sn Gew.-% | Ag Gew.-% | Si Gew.-% | T °C | T °C |
|-----------|-----------|-----------|-----------|------|------|
| C 4250  +) | 13,5 | - | - | 810 | 980 |
| B 2924 | 13,5 | 2,0 | - | 720 | 920 |
| B 2929 | 13,5 | 4,0 | - | 710 | 910 |
| B 2952 | 13,5 | 4,0 | 2,0 | 550 | 790 |
| A 4813 | 13,5 | 7,0 | 3,0 | 500 | 730 |
| A 4822 | 15,0 | 3,0 | 2,0 | 700 | 905 |
| A 4823 | 15,0 | 6,0 | 1,5 | 630 | 870 |
| A 4824 | 15,0 | 9,0 | 1,0 | 590 | 835 |
| B 2954 | 15,0 | 20,0 | - | 550 | 810 |
| B 2951 | 17,0 | 4,0 | - | 700 | 850 |
| D  312 | 17,0 | 4,5 | 1,5 | 620 | 750 |
| D  310 | 17,0 | 8,0 | 2,0 | ·550 | 715 |

+) Legierung nach dem Stand der Technik

T a b e l l e   II

| Lot | Mat. 1 | Mat. 2 | Löttemp. | Fließverh. | Lötverh. |
|-----|--------|--------|----------|------------|----------|
| C 4250 +) | 3 | 2 | 900 | 3 | 3 |
| C 4250 +) | 3 | 3 | 900 | 3 | 3 |
| B 2951 | 3 | 2 | 850 | 2 | 1 |
| B 2951 | 3 | 3 | 850 | 2 | 1 |
| B 2952 | 3 | 1 | 800 | 1 | 1 |
| B 2952 | 3 | 2 | 800 | 1 | 1 |
| B 2952 | 3 | 3 | 800 | 1 | 1 |
| B 2952 | 2 | 1 | 800 | 1 | 1 |
| B 2952 | 2 | 2 | 800 | 1 | 1 |
| B 2952 | 1 | 4 | 900 | 1 | 2 |
| A 4824 | 3 | 3 | 850 | 1 | 1 |
| A 4824 | 3 | 2 | 850 | 1 | 1 |
| A 4824 | 1 | 2 | 850 | 1 | 2 |
| A 4824 | 1 | 4 | 900 | 1 | 1 |
| B 2954 | 3 | 3 | 850 | 1 | 1 |
| B 2954 | 3 | 2 | 850 | 2 | 2 |
| B 2954 | 3 | 1 | 850 | 1 | 2 |

+) Legierung nach dem Stand der Technik

**Patentansprüche**

1.  Metallegierung zum Hartlöten im Temperaturbereich von etwa 500 °C bis 900 °C, die zur Herstellung einer Lötverbindung ohne Verwendung zusätzlicher Flußmittel geeignet und durch Rascherstarrung als homogene, duktile Lötfolie oder Lötdraht herstellbar ist, **dadurch gekennzeichnet,** daß die Legierung zwischen 10 und 20 Gew.% Sn, zwischen 0,5 und 20 Gew.% Ag und zwischen 0,1 und 10 Gew.% Si, Rest Cu enthält.

2. Metallegierung nach Anspruch 1, **dadurch gekennzeichnet,** daß die Legierung zwischen 10 und 20 Gew.% Sn, zusammen zwischen 0,5 und 20 Gew.% Ag und Si, Rest Cu enthält.

3. Metallegierung nach Anspruch 1, **dadurch gekennzeichnet,** daß der Anteil von Ag und Si zusammen zwischen 0,5 und 10 Gew.% liegt.

4. Metallegierung nach Anspruch 1, **dadurch gekennzeichnet,** daß die Legierung zwischen 10 und 20 Gew.% Sn, zwischen 0,5 und 10 Gew.% Ag und zwischen 0,1 und 5 Gew.% Si, Rest Cu enthält.

5. Metallegierung nach Anspruch 1, **dadurch gekennzeichnet,** daß die Legierung zwischen 10 und 20 Gew.% Sn, zwischen 2 und 6 Gew.% Ag und zwischen 0,5 und 3 Gew.% Si, Rest Cu enthält.

6. Metallegierung nach einem der Ansprüche 1 bis 5, **dadurch gekennzeichnet,** daß das Verhältnis von Silber zu Silizium zwischen 2:1 und 9:1 liegt.

7. Verwendung einer Metallegierung nach den Ansprüchen 1 bis 6 zum Hartlöten von Cu-Basislegierungen untereinander.

8. Verwendung einer Metallegierung nach den Ansprüchen 1 bis 6 zum Hartlöten von Cu-Basislegierungen mit Stahl oder Hartmetall.

9. Verwendung einer Metallegierung nach den Ansprüchen 1 bis 6 zum Hartlöten von Stahl mit Hartmetall.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | EP-A-0 058 206 (MITSUBISHI) <br> - - - | | B 23 K 35/30 <br> C 22 C 9/02 |
| A,D | EP-A-0 166 144 (ALLIED CORP.) <br> - - - - - | | |

|  |  | RECHERCHIERTE SACHGEBIETE (Int. Cl.5) |
|---|---|---|
|  |  | B 23 K <br> C 22 C |

Der vorliegende Recherchenbericht wurde für alle Patentansprüche erstellt

| Recherchenort | Abschlußdatum der Recherche | Prüfer |
|---|---|---|
| Den Haag | 26 August 91 | MOLLET G.H.J. |